(19) Europäisches Patentamt
European Patent Office
Office européen des brevets

(11) Veröffentlichungsnummer: 0 539 807 A1

(12) **EUROPÄISCHE PATENTANMELDUNG**

(21) Anmeldenummer: **92117692.1**

(22) Anmeldetag: **16.10.92**

(51) Int. Cl.[5]: **C08G 18/54**, C09D 175/04, C09J 175/04

(30) Priorität: **29.10.91 DE 4135572**

(43) Veröffentlichungstag der Anmeldung: **05.05.93 Patentblatt 93/18**

(84) Benannte Vertragsstaaten: **BE CH DE FR GB IT LI NL**

(71) Anmelder: **BAYER AG**

**W-5090 Leverkusen 1 Bayerwerk(DE)**

(72) Erfinder: **Franke, Joachim, Dr., c/o Miles Inc.**
**One Mellon**
**Center, 500 Grant St.**
**Pittsburgh PA 15219-2502(US)**
Erfinder: **Fähling, Friedhelm**
**Burgstrasse 9**
**W-4130 Moers(DE)**
Erfinder: **Jakob, Hans-Dieter**
**Burscheider Strasse 223**
**W-5090 Leverkusen 3(DE)**

(54) **Hydrophobe Polyurethan-Systeme.**

(57) Härtbare Reaktionsharzmischungen, die auch in Gegenwart von Luftfeuchtigkeit und/oder nicht getrockneten Medien zu kompakten, Formstoffen aushärten, dadurch gekennzeichnet, daß die Reaktionsharzmasse besteht aus:

a) festem Novolakharz (Phenol-Formaldehydharz)
b) geeigneten Lösungsmitteln
c) Katalysatoren
d) Polyisocyanaten
e) Füll- und Verstärkungsstoffen
f) gegebenenfalls übliche Zusatzmittel

EP 0 539 807 A1

Die vorliegende Erfindung betrifft härtbare Reaktionsharzmischungen, die in Gegenwart von Luftfeuchtigkeit/feuchten Medien zu blasenfreien Formkörpern ausharten.

Bei der Verarbeitung von Polyurethanformulierungen nach handwerklichen Verfahren, z.B. Beschichtung als Lack oder Spachtelmasse sowie beim Verguß von elektronischen Bauteilen und die der Elektronik oder im konstruktiven Bereich zur Herstellung von Formen nach der Laminier-, Gieß- oder Reaktionsharzbetontechnologie als auch zur Fertigung von Rohren im Filament-winding-Verfahren, tritt häufig das Problem unerwünschter Nebenreaktionen des Isocyanats mit Wasser auf, das in Form von Oberflachen- oder Luftfeuchte present ist. Um die damit verbundene Schaumbildung, die die Herstellung von kompakten, mechanisch und elektrisch belastbaren Formstoffen verhindert, zu unterdrücken, hat man sich bisher damit beholfen, daß relativ hydrophobe Polyesterpolyole, beispielsweise auf Fettsäurebasis, wie z.B. Rizinusöl und/oder hydrophobierende Lösemittel oder Weichmacher wie N-Dodezylbenzol, verwendet wurden. Eine weitere Möglichkeit bestand in der Verwendung von weniger feuchtesensibelen Prepolymeren basierend auf Diphenylmethandiisocyanat, Toluylendiisocyanat und insbesondere Hexamethylendiisocyanat sowie verkappten Isocyanaten. Des weiteren werden in der DE-OS 39 30 837 härtbare PUR-Formulierungen beschrieben, die auf Isocyanatpolymermonomergemischen und Phenolharzformaldehydkondensaten des Typs Resorzinharze basieren. Diese Gemische werden in geringen Anteilen zur Verfestigung von sogenannten Kernsänden verwendet und unter Durchleiten von Luft/Triethylamin Gas oder Aerosolgemischen gehärtet. Ein weiterer Hinweis zu dieser Gruppe härtbarer Polyurethanrohstoffkombinationen finden sich in der EP 0 023 586. Beschrieben werden Polyole des Typs Novolak zur Herstellung von GF-Trockenprepregs mit hoher Wärmeformbeständigkeit und geringer Feuchteempfindlichkeit. Die dabei verwendeten Lösungsmittel werden in diesem Verfahren vor der Härtung zum duroplastischen Werkstoff durch Verdampfen entfernt. Die auf diesen Wegen erhaltenen Formstoffe erweisen sich jedoch speziell bei Verwendung für Elektro- und Elektronikanwendungen sowie im konstruktiven Bereich als weniger geeignet, da ihre mechanischen thermischen und elektrischen Eigenschaften für viele Fälle nicht ausreichten oder die beschriebenen Verfahren nicht zu den gewünschten Ergebnissen führen, da die Verfahrensbedingungen -wie Schichtdicke oder Gasdurchlässigkeit - nicht erfüllt werden können. Darüber hinaus zeigen solche Kombinationen, die zudem Estergruppen enthalten, zu hohe Wasseraufnahmen bei zu geringer Hydolysebeständigkeit. In der DE-OS 38 39 334 werden nun Polyesterpolyole aus TMP, Sojaölfettsäure und Isononansäure beschrieben, mit geringer Feuchtempfindlichkeit und gegenüber Rizinusöl deutlich verbesserter Hydrolysebeständigkeit, die jedoch in Formstoffen auf MDI-Basis niedrige Wärmeformbeständigkeiten aufweisen. Aufgabe der Erfindung war deshalb, gießfähige zu blasenfreien Formkörpern aushärtende Formmassen zu entwickeln, die gegenüber dem Stand der Technik folgende Vorteile und Verbesserungen bieten:

- höhere Wärmeformbeständigkeit
- verbesserte Hydrolysebeständigkeit
- geringe Feuchteempfindlichkeit
- Direktverträglichkeit
- längere Verarbeitungszeiten

Gegenstand der Erfindung sind demnach härtbare Reaktionsharzmischungen bestehend aus Polyisocyanaten, Novolaken sowie geeigneten Lösemitteln.

Bei den Polyisocyanaten handelt es sich um beliebige organische Polyisocyanate der aus der Polyurethanchemie an sich bekannten Art. Geeignet sind beispielsweise aliphatische, araliphatische, aromatische und heterocyclische Polyisocyanate, wie sie z.B. B von W. Siefken in Justus Liebigs Annalen der Chemie, <u>562</u>, Seiten 75 bis 136, beschrieben werden, insbesondere der Formel

$$Q\ (NCO)_{n}'$$

in der

N = 2 - 4 (vorzugsweise 2) und Q einen aliphatischen Kohlenwaserstoffrest mit 2 - 18 (vorzugsweise 6 - 10 C-Atomen), einen cycloaliphatischen Kohlenwasserstoffrest mit 4 - 15, (vorzugsweise 5 - 10 C-Atomen), einen aromatischen Kohlenwasserstoffrest mit 6 - 15 (vorzugsweise 6 - 13 C-Atomen) oder einen araliphatischen Kohlenwasserstoffrest mit 8 - 15 (vorzugsweise 8 - 13 C-Atomen) bedeuten.

Besonders bevorzugte Isocyanate I sind 4,4'-Diisocyanatodiphenylmethan, Polyisocyanatgemische der Diphenylmethanreihe, wie sie durch Phosgenierung von Anilin/Formaldehyd-Kondensaten in an sich bekannter Weise gewonnen werden, und die neben den genannten Diisocyanaten wechselnden Mengen an höhere Homologen enthalten, 2,4-Diisocyanatotoluol und seine technischen Gemische mit bis zu 35 Gew.-%, bezogen auf Gesamtgemisch an 2,6-Diisocyanatotoluol, Hexamethylendiisocyanat, 1-Isocyanato-3,3,5-trimethyl-5-isocyanatomethylcyclohexan (Isophorondiisocyanat), Urethan-,

Carbodiimid-, Isocyanurat-, Allophanat- oder Biuret-modifizierte Polyisocyanate auf Basis der genannten unmodifizierten Polyisocyanate oder beliebige Gemische der beispielhaft genannten Polyisocyanate. Vorzugsweise werden die entsprechenden, bei Raumtemperatur flüssigen Polyisocyanate verwendet. Besonders bevorzugt werden als organische Polyisocyanate die Phosgenierungsprodukte von Anilin/Formaldehyd-Kondensaten verwendet.

Die im erfindungsgemäßen Verfahren einzusetzenden Novolake sind in an sich bekannte Phenol-Formaldehyd-Kondensate, die eine Hydroxylfunktionalität von mindestens 3, einen Gehalt an Hydroxylgruppen von mindestens 12, im allgemeinen von ca. 15 bis 17 Gew.-%, einen Erweichungspunkt von vorzugsweise ca. 75 bis 150°C, besonders bevorzugt 75 - 100°C besitzen. Derartige phenolische Hydroxylgruppen aufweisende Phenol-Formaldehyd-Kondensate können beispielsweise gemäß "Kunststoff-Handbuch", Band X, "Duroplaste" von Vieweg/Becker, Carl Hanser Verlag, München 1968, Seiten 20 und 47/48, oder "Methoden der organischen Chemie", Makromolekulare Stoffe, Teil 2, Houben-Weyl, Band XIV/2, Seiten 272 -273, Georg Thieme Verlag, Stuttgart, hergestellt werden.

Die Novolake entsprechen in der Regel der folgenden idealisierten Strukturformel:

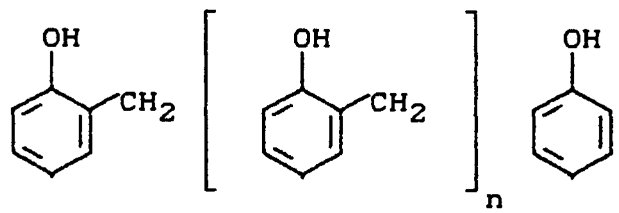

wobei n für eine ganze Zahl von 1 bis 11 steht.

Abweichend von der Idealstruktur der Novolake können bedingt durch Herstellverfahren und Art der Rohstoffe Resorzinstrukturen vorliegen, aus denen ein höherer Gehalt an OH-Gruppen als der der Formel entsprechend resultieren kann.

Verzweigte oder strukturisomere Moleküle (Verknüpfung über die para-Stellung) liegen in der Regel nur in untergeordneten Anteilen vor.

Als Lösemittel kommen alle mit Novolaken nicht reagierende, üblichen Lösemittel in Frage. Besonders bevorzugt sind Lösemittel mit hohen Siedepunkten von mehr als 200°C, insbesondere Propylencarbonat mit einem Siedepunkt von 242°C.

Andere Materialien wie z.B. Füllstoffe, Verstärkungsmaterialien, Katalysatoren oder sonstige übliche Zusätze können selbstverständlich mitverwendet werden.

Die einzelnen Füllmaterialien können z.B. sein: Talk, Kalk, Dolomit, Glimmer, Quartz, Glasfasern, Mineralfasern und/oder synthetische organische Fasern.

Geeignete Katalysatoren sind z.B, tertiäre Amine (z.B. Diazo-bis-cyclooctan oder Dibenzylmethylamin).

Metallsalze wie Zinn-, Zink-, Wismuth-, Eisen und/oder Quecksilbersalze. Die Katalysatoren werden in Mengen von 0,1-0,5 Gew.-% - bezogen auf Gesamtgemisch -eingesetzt.

Die einzelnen Komponenten werden vorzugsweise in folgenden Mengen eingesetzt:

6 - 38 Gew.-% Novolakharz,
6 - 50 Gew.-% Lösungsmittel,
0 - 0,3 Gew.-% Katalysator und
29 - 77 Gew.-% Polyisocyanat.

Der Gegenstand der Erfindung soll anhand der folgenden Beispiele noch näher erläutert werden:

Charakterisierung der verwendeten Substanzen:

a) Novolak
b) Isocyanat
c) Isocyanat
d) Isocyanat
e) Propylencarbonat
f) Zeolithpaste

Bei der Ausgangskomponente a) handelt es sich um ein festes Phenol-formaldehydkondensat hellgelber bis gelber Farbe mit einem OH-Gehalt von 18 %, entsprechend einer OH-Zahl von 594 und einem OH-Äquivalent von 94,5. Der Restwassergehalt nach Fischer beträgt ca. 0,1 %. Die Säurezahl beträgt 52.

Bei der Ausgangskomponente b) handelt es sich um:
Diphenylmethandiisocyanatisomerengemisch, bestehend aus 4,4' und 2,4' MDI, mit einem NCO-Gehalt von 31 % und einer Viskosität von 110 mPa.s.

Bei der Ausgangskomponente c) handelt es sich um:
Diphenylmethandiisocyanatisomerengemisch, bestehend aus 4,4' und 2,4' MDI sowie einem Prepolymeranteil mit einem NCO-Gehalt von 25 % und einer Viskosität von 550 mPa.s.

Bei der Ausgangskomponente d) handelt es sich um:
Diphenylmethandiisocyanatisomerengemisch, bestehend aus 4,4' und 2,4' MDI, mit einem NCO-Gehalt von 32 % und einer Viskosität von 50 mPa.s.

Bei der Ausgangskomponente e) handelt es sich um:
Propylencarbonat
Bei der Ausgangskomponente f) handelt es sich um:
50 % Zeolith (Zeolith A, Porengröße 3Å)
50 % Rizinusöl mit einem OH-Gehalt von 4,8 %.

## Beispiele

### Beispiel 1

### Herstellung von Novolak-Lösungen in Propylencarbonat

a) Lösung 50 %ig

Ein Dreihalskolben oder Planschliffgefäß wird mit Rührvorrichtung, Regelthermometer und Rückflußkühler versehen. Zur Beheizung wird ein Heizpilz verwendet, der über eine Regeleinrichtung verfügt.

Für die benötigte Menge von 5000 g Lösung werden 2500 g Propylencarbonat entsprechend Ausgangskomponente e) vorgelegt und auf 60 - 80 °C erwärmt. Die benötigte Menge von 2500 g Novolak entsprechend Ausgangskomponente a) wird - nach vorausgegangenem Zerkleinern - langsam unter Rühren dem Lösungsmittel zugegeben und gelöst. Nach ca. 6 Stunden erhält man eine hell-mittelbraune Harzlösung, die nach einer abschließenden Filterung eine bevorzugte Viskosität bei 25 °C von 2500 - 3500 mPa.s aufweist und ein reaktionsfähiges Polyol darstellt.

b) Lösung 70 %ig

Einrichtung und Herstellung wie unter a) beschrieben. Der vorgelegten Menge von 1500 g Propylencarbonat entsprechend Ausgangskomponente e) wird eine Menge von 3500 g Novolak entsprechend Ausgangskomponente a) zugegeben und gelöst. Nach einer Rührzeit von ca. 10 Stunden erhält man ein hochviskoses Harz mit einer Viskosität von ca. 40 000 mPa.s. Für allgemeine Gießharzanwendungen kommt dieses Harz nicht in Frage.

### Beispiel 2

### Lösungsversuche in unterschiedlichen Medien

(zum Teil reaktive Gruppen enthaltend)

| | |
|---|---|
| Ansatz: | 50 Gew.-Tl. Novolak, entsprechend Ausgangskomponente a) |
| | 50 Gew.-Tl. LM (Lösungsmittel) |
| Herstellung: | Wie unter Beispiel 1 näher beschrieben. |

| Vers.-Nr. | Medium | Löslichlichkeit (+)=löslich (-)=unlöslich | Viskosität in mPa.s bei 25° C | bei 60° C |
|---|---|---|---|---|
| 1 | Styrol | (-) | - | - |
| 2 | Propylencarbonat | (+) | 2500-3500 | - |
| 3 | Δ -Butyrolakton | (+) | 2000 | - |
| 4 | N-Methylpyrrolidon | (+) | 49000 | - |
| 5 | Unimoll BB a) | (+) | Festharz | 30000 |
| 6 | Ethanol | (+) | 400 | - |
| 7 | Dipropylenglykol | (+) | Festharz | 7500 |
| 8 | Verdünner PU b) | (+) | Festharz | 2600 |
| 9 | Baygal K 95 c) | (+) | Festharz | >60000 |
| 10 | Glyzerin | (+) | Festharz | 12500 |
| 11 | 2-Ethylenhexandiol 1,3 | (+) | Festharz | 5000 |
| 12 | Baygal K 55 d) | (+) | Festharz | >60000 |
| 13 | Benzylalkohol | (+) | 3100 | - |
| 14 | Methansäuremethylester | (+) | 1500 | - |
| 15 | Solvesso e) | (-) | - | - |

a) Adipinsäuredibutylester
b) propoxiliertes Alkylphenol
c) Polyetherpolyol auf Basis Ethylenglykol und Propylenoxid
d) Polyetherpolyol auf Basis TMP und Propylenoxid mit einer OH – Zahl von 370 und einer Viskosität von 600 mPa.s.
e) Kohlenwasserstoff mit einem Molekulargewicht von 246 und einem Siedepunkt von ca. 150 ° C.

Beispiel 2a

Einfluß des Katalysators

Neben der Hydrophobie des Polyol/Isocyanat – Gemisches beeinflussen die Art der verwendeten Katalysatoren und die Einwirkungsdauer des Wassers auf das reaktive Gemisch den Grad der Schaum – bzw. Blasenbildung. Eine Auswahl von Amin – und Metallkatalysatoren wurden in einer 50 %igen Lösung eines Novolakes (entsprechend Ausgangskomponente a) in Propylencarbonat entsprechend Ausgangs – komponente e und eines Isomerengemisches aus 2,4' und 4,4' Diphenylmethyndiisocyanat entsprechend Ausgangskomponente d zur Einstellung des Potlifes verwendet.

| Katalysator | Menge (%) | Potlife (Min.) | Schaumbildung |
|---|---|---|---|
| Dimethylbenzylamin | 0,060<br>0,030<br>0,015 | 15<br>55<br>90 | gering<br>gering<br>stark |
| Sn-II-ethylhexoat | 0,120<br>0,060<br>0,030 | 5<br>9<br>30 | keine<br>keine<br>keine |
| Diazobiscyclooctan | 0,240<br>0,120<br>0,060 | 12<br>20<br>45 | Spur<br>gering<br>gering |
| ohne | - | 300-360 | stark |
| Zn-octoat, 8 % Zn | 0,120<br>0,060 | 7<br>9 | keine<br>keine |

Beispiel 3

Nachweis der Wasserempfindlichkeit durch Tests aus der Prüfung von Kabelvergußmassen gegenüber Standard-System

Test A:

In einen PE-Becher wird 1 g $H_2O$ eingewogen. Anschließend werden 100 g der zu prüfenden Harzsubstanz (reaktive PUR-Masse) derart in den Becher gefüllt, daß das Wasser durch die PUR-Masse nach oben gedrückt wird und auf der Harzoberfläche als ein zusammenhängender Tropfen schwimmt. Nach einer Verweildauer von 24 Stunden bei Raumtemperatur, während der die Härtung der Gießharzmasse verläuft, wird der Reaktionsharzgießling einer Begutachtung unterzogen. Bei positiv zu bewertendem Ergebnis zeigt sich nach Abgießen der Wassermenge an dieser Stelle eine tropfenartige Vertiefung. Nicht bestanden wird gewertet, wenn die Berührungsfläche zum Wasser leicht blasig bis stark geschäumt ist.

Test B:

Ein ca. 6 cm langes Stück PVC-Schlauch wird aufgerauht, mit Wasser benetzt und aufrecht in einen PE-Becher gestellt und fixiert. Danach wird der zu prüfende Ansatz (reaktive PUR-Masse) eingefüllt, wobei der feuchte Schlauch von der Harzmasse umhüllt wird. Nach einer Verweildauer von 24 Stunden bei Raumtemperatur, während der die Härtung der Gießharzmasse verläuft, erfolgt die Begutachtung. Hierbei wird nach etwaiger Schaumbildung im Schlauchbereich gesucht. Die Bewertung entspricht der aus Test A. Die Ergebnisse sind in der nachfolgenden Tabelle zusammengefaßt.

| Versuch | Ansatz | Ergebnisse Test A | Ergebnisse Test B |
|---|---|---|---|
| 1 | 100 Gew.-Tl. eines Polyetherpolyols auf Basis TMP und PO mit einer OH-Zahl von 370 und einer Viskosität von 600 mPa.s<br>10 Gew.-Tl. Zeolithpaste entsprechend Ausgangskomponente f<br>100 Gew.-Tl. Isocyanat, entsprechend Ausgangskomponente b | stark blasig | stark blasig |
| 2 | 100 Gew.-Tl. eines Polyetherpolyols auf Basis TMP und PO mit einer OH-Zahl von 370 und einer Viskosität von 600 mPa.s<br>10 Gew.-Tl. Zeolithpaste entsprechend Ausgangskomponente f<br>100 Gew.-Tl. Isocyanat, entsprechend Ausgangskomponente b o,5 Gew.-Tl. Dimethylbenzylamin | stark blasig | stärker blasig als bei 1 |
| 3 | 100 Gew.-Tl. eines Polyetherpolyols auf Basis TMP und PO mit einer OH-Zahl von 370 und einer Viskosität von 600 mPa.s<br>10 Gew.-Tl. Si-Öl PN 200 Polymethyl-diphenyl-siloxan Viskosität 200 mPas<br>100 Gew.-Tl. Isocyanat, entsprechend Ausgangskomponente b 0,5 Gew.-Tl. Dimethylbenzylamin | Blasen im inneren Bereich des Gießlings des Gieß- | stark blasig, jedoch fein fein verteilt |
| 4 | 100 gew.-Tl. 50%ige Novolak/Propylencarbonat-Lösung<br>10 Gew.-Tl. Zeolithpaste entsprechend Ausgangskomponente f<br>0,2 Gew.-Tl. Octasoligen-Zink mit 8 % Zinkgehalt<br>70 Gew.-Tl. Isocyanat, entsprechend Ausgangskomponente b | blasenfrei | blasenfrei |

Beispiel 4

Dünnschichtaushärtungen auf Glasscheiben

Für diese Untersuchung wurde eine 50 %ige Novolak-Lösung in Propylencarbonat, hergestellt mit Zeolithpaste entsprechend Ausgangskomponente f, gemischt und mit Isocyanat umgesetzt. Verglichen wurde hier mit einem Polyol-Gemisch gleichen OH-Gehaltes von ca. 8 % und einem OH-Äquivalent von 212 und zwar:
65 Gew.-Tl. eines Polyetherpolyls auf Basis TMP und PO
OH-Zahl 370, Viskosität 600 mPa.s
35 Gew.-Tl. eines Polyetherpolyols auf Basis TMP und PO
OH-Zahl 56, Viskosität 500 mPa.s
Die MDI-Menge von 70 Gew.-Tl. errechnet sich wie folgt:

```
   64,0 Gew.-Tl. MDI (NCO-% 33) für 100 Gew.-Tl PO
+                  (OH-% 8)
    2,2 Gew.-Tl. MDI für 10 Gew.-Tl. Zeolithpaste
                   entsprechend Ausgangskomponente f
_______________
   66,2 Gew.-Tl.
```

Danach erfolgte Aufrundung auf 70 Gew.-Tl.

Die Ansätze wurden auf Glasscheiben gegossen, wo sie einen dünnen Film bildeten. Die Aushärtung erfolgte
a) in Umgebungsatmosphäre und
b) im Exsikkator
bei ca. 100 % relativer Feuchte und Raumtemperatur. Die Ergebnisse enthält die nachfolgende Tabelle:

| Vers. | Ansatz | Aushärtung bei Umgebungsatmosphäre | Raumtemperatur Exsikkator mit ca. 100 % rel. Feuchte |
|---|---|---|---|
| 1 | 50 Gew.-Tl. Novolak<br><br>50 Gew.-Tl. Propylencarbonat[2]<br>10 Gew.-Tl. Zeolithpaste[3]<br>70 Gew.-Tl. Isocyanat[4] | Härtet gut aus glänzende glatte Oberflache, blasenfrei | Härtet gut aus, glänzende glatte Oberfläche, blasenfrei |
| 2 | 100 Gew.-Tl. des beschriebenen Polyestergemisches mit 8 % OH-Gehalt<br>10 Gew.-Tl. Zeolithpaste[3]<br>70 Gew.-Tl.Isocyanat[4] | Optisch schlechte Oberfläche durch Wolken und Entmischung, große Blasen | |

1 entsprechend Ausgangskomponente a
2 entsprechend Ausgangskomponente e
3 entsprechend Ausgangskomponente f
4 entsprechend Ausgangskomponente b

Beispiel 5

Plattenmaterial für die Prüfung mechanischer Eigenschaften und Wasseraufnahme

Für Vergleichsprüfungen wurden die in der Tabelle angegebenen Ansätze untersucht. Es handelt sich um diejenigen Mischungen, an den in Beispiel 4 schon Dünnschichtaushärtungen durchgeführt wurden.

Reaktionsharzmischungen wurden in 4 – mm – Plattenformen der Maße 200 x 300 mm gegossen, gehärtet und in die entsprechenden Prüfkörper aufgeschnitten. Die Ergebnisse enthält die folgende Tabelle. Hier wird insbesondere die ausgezeichnete Hydrophobie an der Wasseraufnahmeprüfung demonstriert.

| | Versuch | 1 | 2 | 3 | 4 | 5 |
|---|---|---|---|---|---|---|
| | Ansatz | Gew.-Tl.<br>50 Novolak 1)<br>50 Propylen-carbonst2)<br>10 Zeolith-paste 3) | Versuch 1+<br>120 Gew.-Tl.<br>Quarzmehl 4) | Gew.-Tl.<br>100 Polyether<br>Polyolgemisch<br>entspr.Bsp.4<br>10 Zeolith-paste 3) | Versuch 3+<br>120 Gew.-Tl.<br>Quarzmehl 4 | Gew.Tl.<br>50 Novolak1)<br>50 Propylen-carbonat2<br>10 Zeolith-paste 3 |
| | Härtung | 24 Stunden RT + 24 Stunden 80° C | | | | 16 h 160° C |
| Zugfestigkeit | $N/mm^2$ | 40 | 35 | 45 | 47 | |
| Dehnung | % | 5,7 | 1,2 | 20,8 | 8,3 | |
| E-Modul | $N/mm^2$ | 1805 | 3600 | 2040 | 3710 | |
| Biegefestigkeit | $N/mm^2$ | 62 | 55 | 67 | 77 | |
| Randfaserdehnung | % | 5,6 | 1,8 | 5,2 | 4,4 | |
| Schlagzähigkeit | $KJ/m^2$ | - | - | - | - | 9,96 |
| Kugeldruckhärte | $N/mm^2$ | 82 | 127 | 103 | 148 | |
| Martensgrad | °C | 50 | 56 | 45 | 48 | 91 |
| $H_2O$-Aufnahme nach 24 Std. -23° C an an Prüfkörper 50x50x3 mm | mg | 9,05 | 9,8 | 23 | 18,9 | |
| | % | 0,08 | 0,085 | 0,21 | 0,15 | |

1) entsprechend Ausgangskomponente a
2) entsprechend Ausgangskomponente e
3) entsprechend Ausgangskomponente f
4) mittlere Körnung 16 - 32 µm

Beispiel 6

Unterwasseraushärtung

Reaktionsgemisch, bestand aus Novolak/PC-Lösung, 50 %ig, Zeolithpaste und Diphenylmethandiisocyanat. Gießfähige Masse mit der Eigenschaft, unter Wasser auszuhärten und nach 24 Std. bei Umgebungstemperatur eine harte schaumfreie Reparaturmasse darzustellen.

Ansatz:

50 Gew.-Tl. Novolak, entsprechend Ausgangskomponente a
50 Gew.-Tl. Propylencarbonat, entsprechend Ausgangskomponente e
10 Gew.-Tl. Zeolithpaste, entsprechend Ausgangskomponente f
70 Gew.-Tl. Isocyanat, entsprechend Ausgangskomponente d

Ansatz wurde bei Raumtemperatur gemischt und entgast unter Vakuum (20 mbar über 30 Minuten). Das reaktive Gemisch wurde in ein mit Wasser gefülltes Becken gefüllt und setzte sich am Boden ab. Nach ca. 20 Stunden konnte ein ausgehärteter PUR-Gießling entformt werden, der lediglich an der Berührungsfläche zum Wasser einige kleine Blasen aufwies.

Beispiel 7

Fußbodenbeschichtungsmassen

Reaktionsharzgemisch aus Novolak/Propylencarbonat-Lösung, 50 %ig, Zeolithpaste und Diphenylmethandiisocyanat als Bindemittel einer selbstverlaufenden, eingefärbten Gießharzmasse.

Ansatz (Gew.-Tl.):

75,0 Novolak, ensprechend Ausgangskomponente a
75,0 Propylencarbonat, entsprechend Ausgangskomponente e
15,0 Zeolithpaste, entsprechend Ausgangskomponente f
105,0 Isocyanat, entsprechend Ausgangskomponente d
20,0 Weißpaste (Titandioxid, Rutil/Phthalatgemisch, 50:50)
10,0 Chromoxidpigmentpaste ($Cr_2O_3$/Phthalatgemisch 50:50)
260,0 Quarzmehl, mittlere Körnung 16 - 32 µm
1,5 Dimethylbenzylamin, 10 %ig in Propylencarbonat

Die Masse wurde auf eine feuchte Betonplatte gegossen und bei Raumtemperatur 24 Stunden gehärtet. Danach erhält man eine blasenfreie, glänzende, mechanisch belastbare Bodenbeschichtung.

Beispiel 8

Kabelvergußmasse

Reaktionsgemisch, bestehend aus Novolak/Propylencarbonat -Lösung, 50 %ig, Zeolithpaste, Diphenylmethandiisocyanat und Quarzmehl als Gießharzmasse zur Isolierung von Kabelverbindungen.

Ansatz (Gew.-Tl.):

50 Novolak, entsprechend Ausgangskomponente a
50 Propylencarbonat, entsprechend Ausgangskomponente e
10 Zeolithpaste, entsprechend Ausgangskomponente f
70 Isocyanat, entsprechend Ausgangskomponete d
1 Dimethylbenzylamin, 10 %ig in Propylencarbonat

Der Ansatz wurde gemischt und in eine Polypropylenkabelmuffe gegossen, in die zur Simulation ein Elektrokabel eingelegt wurde. Nach 24 Stunden erhalt man eine Kabelmuffe, die sich durch machanische Belastbarkeit und gute Haftung der PUR-Ummantelung auf Kabeln auszeichnet.

Beispiel 9

Schnellvergußmasse

| | | |
|---|---|---|
| Komponente 1: | 50,00 Gew. – Tl. | Novolak entsprechend Ausgangskomponente a |
| | 50,00 Gew. – Tl. | Propylencarbonat entsprechend Ausgangskomponente e |
| | 10,00 Gew. – Tl. | Zeolithpaste entsprechend Ausgangskomponente f |
| | 2,00 Gew. – Tl. | Eisenoxidpigment (Fe(II) – oxidhydrat)gelb |
| | 80,00 Gew. – Tl. | Schwerspat, mittlere Körnung, 3 – 4 µm |
| | 0,50 Gew. – Tl. | Esterwachs, Tropfpunkt 79 – 85 °C, Verseifungszahl 130 – 160 |
| | 0,17 Gew. – Tl. | Zinn – II – ethylhexoat |
| | 1,00 Gew. – Tl. | Calciumoctoat mit 4 % Cal cium |
| Komponente 2: | 100,00 Gew. – Tl. | Isocyanat entsprechend Ausgangskomponente c) |
| | 127,00 Gew. – Tl. | Schwerspat, mittlere Körnung 3 – 4 µm |

Die Komponenten 1 und 2 werden im Verhältnis 1 : 1 gemischt.

Verarbeitungseigenschaften bei 23 °C:

Reaktionsharzgemischmenge 100 g
Verarbeitungszeit 3 Min. 40 Sek.
Temperaturmaxomum 57 °C nach 10 Min.

Eigenschaften des gehärteten Formstoffes:

Shore – Härte D 87 nach 24 Std. RT – Lagerung
Schwindung 0,45 % nach 1 Woche RT – Lagerung

Bei Verwendung der Reaktionsharzmischung in naturfeuchten Holzformen zeigen die Kontaktflächen des gehärteten Gießlings keine Poren oder Blasen.

Beispiel 10

Spachtel und Reparaturmasse

| | | |
|---|---|---|
| Komponente 1: | 50,0 Gew. – Tl. | Novolak entsprechend Ausgangskomponente a) |
| | 50,0 Gew. – Tl. | Propylencarbonat entsprechend Ausgangskomponente e) |
| | 5,0 Gew. – Tl. | hydriertes Rizinusöl, Verseifungszahl 170 – 185 |
| | 110,0 Gew. – Tl. | Talkum, mittlere Körnung 20 – 30 µm |
| | 5,0 Gew. – Tl. | Eisenoxidpigment, schwarz |
| | 1,5 Gew. – Tl. | Zinn – II – ethylhexoat |
| | 1,0 Gew. – Tl. | Calciumoctoat mit 4 % Calcium |
| Komponente 2: | 85,0 Gew. – Tl. | Diphenylmethandiisocyanat entsprechend Ausgangskomponente c) |
| | 5,0 Gew. – Tl. | Kristallöl 30 |
| | 8,0 Gew. – Tl. | hydriertes Rizinusöl, Verseifungszahl 170 – 185, Schmelzpunkt 80 – 86 °C (in Pulverform) |
| | 125,0 Gew. – Tl. | Kreide, mittlere Körnung 10 µm |
| | 0,5 Gew. – Tl. | Titandioxidpigment |

Die Ausgangsprodukte der Komponenten 1 und 2 werden im Dissolver unter Vakuum bei einer Temperatur von 70 °C miteinander vermischt. Die Komponenten 1 und 2 werden nach Abkühlen auf Raumtemperatur im Verhältnis 1 : 1 gemischt.

Verarbeitungseigenschaften bei 22 °C und 42 % relativer Feuchte:

Reaktionsgemischmenge 100 g
Verarbeitungszeit 5 Min.

Eigenschaften des gehärteten Formstoffes (geprüft auf entfetteten und geschliffenen Karosserieblechen in einer Schichtdicke von ca. 3 mm):

| | | |
|---|---|---|
| Klebfreiheit der Oberfläche<br>gut schleifbar (Trockenschleifpapier, 80er Körnung) | nach 60 Min.<br>nach 4 Std. | |
| Shore – Härte D | nach 1 Std.<br>nach 4 Std.<br>nach 22 Std, | 47<br>63<br>75 |

| Haftung nach | |
|---|---|
| 22 Std. bei 22 ° C | mäßig |
| 1 Std. bei 90 ° C Temperung | keine |
| 1 Std. bei 180 ° C Temperung | gut |
| 1 Std. bei 220 ° C Temperung | mäßig |

Haftungsprüfungen auf unterschiedlichen Substraten:

| RIM – PUR (Polyurethanintegralschaum) | |
|---|---|
| nach 22 Std. bei 22 ° C | sehr gut |
| nach 1 Std. bei 90 ° C Temperung | sehr gut |

| UP – SMC (Harzmatte) | |
|---|---|
| nach 22 Std. bei 22 ° C | sehr gut |
| nach 1 Std. bei 80 ° C Temperung | sehr gut |

Alle Spachtelfilme zeigten ein kompaktes, porenfreies Aussehen.

Beispiel 11

Spachtel und Reparaturmasse

| | | |
|---|---|---|
| Komponente 1: | 50,0 Gew. – Tl. | Novolak entsprechend Ausgangskomponente a) |
| | 55,0 Gew. – Tl. | Propylencarbonat entsprechend Ausgangskomponente e) |
| | 15,0 Gew. – Tl. | Ammoniummontmorellionitpulver |
| | 2,5 Gew. – Tl. | pyrogene Kieselsäure |
| | 85,0 Gew. – Tl. | Talkum mittlere Körnung, 20 – 30 µm |
| | 5,0 Gew. – Tl. | Eisenoxidpigment, schwarz |
| | 1,0 Gew. – Tl. | Calciumoctoat mit 4 % Calcium |
| | 0,3 Gew. – Tl. | Zinn – II – ethylhexoat |
| Komponente 2: | 85,0 Gew. – Tl. | Diphenylmethandiisocyanat entsprechend Ausgangskomponente c) |
| | 15,0 Gew. – Tl. | Kristallöl 30 |
| | 15,0 Gew. – Tl. | Ammoniummontmorellionitpulver |
| | 90,0 Gew. – Tl. | Talkum, mittlere Körnung 20 – 30 µm |
| | 5,0 Gew. – Tl. | Titandioxidpigment |

Die Ausgangsprodukte der Komponenten 1 und 2 werden im Dissolver bei 70 ° C unter Vakuum vermischt.

Das Mischungsverhältnis der Komponenten 1 und 2 beträgt 100 : 90.

Verarbeitungseigenschaften bei 21°C und 68 % relativer Feuchte:

Reaktionsharzgemischmenge 100 g

Verarbeitungszeit 30 Min.

Eigenschaften des gehärteten Formstoffes (geprüft auf entfetteten und geschliffenen Karosserieblechen in einer Schichtdicke von ca. 3 mm):

| | |
|---|---|
| gut schleifbar (Trockenschleifpapier, 80er Körnung) | nach 16 Std. |
| Shore-Härte D nach 16 Std. | 61 |

| Haftung nach | |
|---|---|
| 1 Std. bei 90°C Temperung | sehr gut |
| 1 Std. bei 180°C Temperung | sehr gut |
| 1 Std. bei 220°C Temperung | sehr gut |

Haftungsprüfungen auf unterschiedlichen Substraten:

| RIM-PUR | |
|---|---|
| nach 16 Std. bei 21°C | sehr gut |
| nach 1 Std. bei 90°C Temperung | sehr gut |

| UP-SMC | |
|---|---|
| nach 16 Std. bei 21°C | sehr gut |
| nach 1 Std. bei 90°C Temperung | sehr gut |

Alle Spachtelfilme zeigten ein kompaktes, porenfreies Aussehen.

## Beispiel 12

### Beschichtungs und Feinschichtharz

| | | |
|---|---|---|
| Komponente 1: | 50,0 Gew.-Tl. | Novolak entsprechend Ausgangskomponente a) |
| | 50,0 Gew.-Tl. | Propylencarbonat entsprechend Ausgangskomponente e) |
| | 5,0 Gew.-Tl. | hydriertes Rizinusöl Verseifungszahl 170 - 185 |
| | 5,0 Gew.-Tl. | Chromoxidpigment ($Cr_2O_3$) |
| | 0,1 Gew.-Tl. | Zinn-II-ethylhexoat |
| Komponente 2: | 70,0 Gew.-Tl. | Diphenylmethandiisocyanat entsprechend Ausgangskomponente c) |

Die Bestandteile der Komponente 1 werden im Dissolver unter Vakuum bei max. 70°C miteinander vermischt. Das Mischungsverhältnis der Komponenten 1 und 2 beträgt 110 : 70.

Das Reaktionsharzgemsich obiger Zusammensetzung wurde in einer Trockenschichtdicke von 600 µm auf einer Glasplatte aufgetragen und in Gegenwart von Luft bei Raumtemperatur ausgehärtet.

Verarbeitungseigenschaften:

Reaktionsharzgemischmenge 100 g

Verarbeitungszeit 9 Min.

Eigenschaften des gehärteten Formstoffes:

| Shore – Härte D nach 24 Std. bei 22 ° C 61 | |
|---|---|
| Schaumbildung<br>Oberflächenbeschaffenheit | keine<br>wenige kleine Poren |

Beispiel 13

Beschichtungs – und Feinschichtharz

| | | |
|---|---|---|
| Komponente 1: | 50,0 Gew.-Tl. | Novolak entsprechend Ausgangskomponente a) |
| | 50,0 Gew.-Tl. | Propylencarbonat entsprechend Ausgangskomponente e) |
| | 5,0 Gew.-Tl. | hydriertes Rizinusöl Verseifungszahl 170 -185; Schmelzpunkt 80 - 86° C (in Pulverform) |
| | 5,0 Gew.-Tl. | Chromoxidpigment ($Cr_2O_3$) |
| | 0,2 Gew.-Tl. | Entlüftungsmittel auf Polysiloxan-Basis *) |
| | 0,1 Gew.-Tl. | Zinn-II-ethylhexoat |

*) Als Entlüftungs- bzw. Entschäumungsmittel dientein Polysiloxan vom Typ D4 (octamethylcyclotetrasiloxan)

| | | |
|---|---|---|
| Komponente 2: | 70,0 Gew.-Tl. | Diphenylmethandiisocyanat entsprechend Ausgangskomponente c) |

Die Bestandteile der Komponente 1 werden im Dissolver unter Vakuum bei max, 70 ° C miteinander vermischt. Das Mischungsverhältnis der Komponente 1 und 2 zueinander beträgt 110 : 70.

Das Reaktionsharzgemisch obiger Zusammensetzung wurde in einer Trockenschichtdicke von 600 µm auf einer Glasplatte aufgetragen und in Gegenwart von Luft bei Raumtemperatur ausgehärtet.

Verarbeitungseigenschaften:

| | |
|---|---|
| Reaktionsharzgemischmenge | 100 g |
| Verarbeitungszeit | 13 Min. |

Eigenschaften des gehärteten Formstoffes:

| | |
|---|---|
| Shore – Härte D nach 24 Std bei 22° C 76 | |
| Schaumbildung<br>Oberflächenbeschaffenheit | keine<br>porenfrei |

Beispiel 14

Verbundanker

| | | |
|---|---|---|
| Komponente 1: | 50,0 Gew. – Tl.<br>50,0 Gew. – Tl.<br>10,0 Gew. – Tl.<br>0,2 Gew. – Tl.<br>1,0 Gew. – Tl.<br>315,0 Gew. – Tl. | Novolak entsprechend Ausgangskomponente a)<br>Propylencarbonat entsprechend Ausgangskomponente e)<br>Zeolithpulver (Zeolith A, (3Å)<br>Entlüftungsmittel auf Polysiloxan – Basis<br>Zinn – II – ethylhexoat<br>Quarzsand, Körnung 1 – 2 mm (kantengerundet) |
| Komponente 2: | 70,0 Gew. – Tl. | Diphenylmethandiisocyanat entsprechend Ausgangskomponente d) |

Die Komponenten wurden getrennt voneinander in Glasampullen verpackt, die ineinandergesteckt in eine Sackbohrung einer Betonplatte versenkt wurden. Die Wandungen des Bohrloches waren durch den Diamantschnitt durchnäßt. Durch Eintreiben einer M 16 – Ankerstange mittels einer Schlagbohrmaschine wurden die Ampullen zerstört und der Inhalt zu einem reaktiven Gemisch vereint, das den Spalt zwischen Ankerstange und Bohrlochwandung ausfüllt.

Während der Härtung konnte kein Ausgasen an der Oberfläche der Reaktionsharzmischung beobachtet werden.

Nach 30 Min. Reaktionszeit konnte eine Auszugfestigkeit von 60 KN an der Ankerstange gemessen werden.

Beispiel 15

Verbundanker

Komponente 1: entsprechen Beispiel 14, Komponente 1
Komponente 2: entsprechen Beispiel 14, Komponente 2
Die beiden Komponenten wurden entsprechend dem Beispiel 14 verarbeitet, jedoch wurde das beim Diamantschneiden eingetretene Wasser im Bohrloch belassen. Das Reaktionsgemisch zeigte während der Härtung kein Gasen. Die Auszugsfestigkeit, gemessen nach 30 Minuten, betrug 60 KN.

Beispiel 16

Verbundanker

| | | |
|---|---|---|
| Komponente 1: | 100,0 Gew. – Tl.<br><br>10,0 Gew. – Tl.<br>0,2 Gew. – Tl.<br>0,2 Gew. – Tl.<br>366,0 Gew. – Tl. | eines Polyetherpolyols auf Basis Trimethylolpropan und Propylenoxid mit einer OH – Zahl von 370 und einer Viskosität von 600 mPa.s<br>Zeolithpulver (Zeolith A, (3Å)<br>Entlüftungsmittel auf Polysiloxan – Basis<br>Zinn – II – ethylhexoat<br>Quarzsand, Körnung 1 – 2 mm (kantengerundet) |
| Komponente 2: | 100,0 Gew. – Tl. | MDI entsprechend Ausgangskomponente d) |

Die Verarbeitung des Reaktionsharzgemisches erfolgte entsprechend Beispiel 14. Während der Härtung schäumte die Mischung sehr stark. Innerhalb 30 Minuten erfolgte keine Härtung.

Beispiel 17

Laminierharz

| | | |
|---|---|---|
| Komponente 1: | 50,00 Gew. – Tl.<br>50,00 Gew. – Tl.<br>0,20 Gew. – Tl.<br>0,05 Gew. – Tl.<br>5,00 Gew. – Tl. | Novolak, entsprechend Ausgangskomponente a)<br>Propylencarbonat, entsprechend Ausgangskomponente e)<br>Entlüftungsmittel auf Polysiloxan – Basis<br>Zinn – II – ethylhexoat<br>Zeolithpilver |
| Komponente 2: | 70,0 Gew. – Tl. | MDI entsprechend Ausgangskomponente d) |

Das Reaktionsharzgemisch aus beiden Komponenten zeigte in einer Menge von 100 g eine Verarbeitungszeit von 7 Minuten.

Mittels üblicher Laminiertechnik – Pinsel, Lamfell – und Entlüftungswalzen wurden drei Lagen Glasstapelfaser mit 100 $g/m^2$ Lagengewicht mit der Reaktionsharzmischung imprägniert. Nach dem Aushärten wurde ein blasenfreies Laminat erhalten.

Beispiel 18

Laminierharz

| | | |
|---|---|---|
| Komponente 1: | 100,0 Gew. – Tl.<br><br>10,0 Gew. – Tl.<br>0,2 Gew. – Tl.<br>0,5 Gew. – Tl. | eines Polyetherpolyols auf Basis Trimethylolpropan und Propylenoxid mit einer OH – Zahl von 370 und einer Viskosität von 600 mPa.s<br>Zeolithpulver<br>Entlüftungsmittel auf Polysiloxan – Basis<br>Dimethyl – benzylamin |
| Komponente 2: | 100,0 Gew. – Tl. | MDI entsprechend Ausgangskomponente d) |

Das Reaktionsharzgemisch aus beiden Komponenten zeigte in einer Menge von 100 g eine Verarbeitungszeit von 10 Minuten.

Zur Laminatherstellung wurde nach gleichen Verfahren gearbeitet wie im Beispiel 17. Das ausgehärtete Laminat war schaumig.

Beispiel 19

Hinterfüllmassen

| | | |
|---|---|---|
| Komponente 1: | 50,0 Gew. – Tl.<br>50,0 Gew. – Tl.<br>10,0 Gew. – Tl.<br>0,2 Gew. – Tl.<br>0,5 Gew. – Tl. | Novolak, entsprechend Ausgangskomponente a)<br>Propylencarbonat, entsprechend Ausgangskomponente e)<br>Zeolithpulver<br>Entlüftungsmittel auf Polysiloxan – Basis<br>Dimethyl – benzylamin |
| Komponente 2: | 70,0 Gew. – Tl. | MDI entsprechend Ausgangskomponente d) |

Nach dem Vermischen der beiden Reaktionsharzkomponenten wurde Quarzsand der Körnung 0,1 bis 0,35 mm und 0,2 bis 1,0 mm im Verhältnis 1 : 1 zugefügt und homogenisiert.

Der Reaktionsharzanteil betrug 4,75 %. Der verdichtete Gießkörper zeigte nach der Härtung eine kompakte, porenfreie Struktur. Die Dichte betrug 1,8 $g/cm^3$.

Beispiel 20

Versiegelmasse

| | | |
|---|---|---|
| Komponente 1: | 50,0 Gew. – Tl.<br>50,0 Gew. – Tl.<br>10,0 Gew. – Tl.<br>0,2 Gew. – Tl.<br>0,5 Gew. – Tl. | Novolak, entsprechend Ausgangskomponente a)<br>Propylencarbonat, entsprechend Ausgangskomponente e)<br>Zeolithpulver<br>Entlüftungsmittel auf Polysiloxan – Basis<br>Dimethyl – benzylamin |
| Komponente 2: | 70,0 Gew. – Tl. | MDI entsprechend Ausgangskomponente d) |

50 Gew. – Tl. der Reaktionsharzmischung, bestehend aus Komponente 1 und 2, wurden mit 50 Gew. – Tl. Schiefermehl entsprechend DIN 170 vermengt. Nach der Härtung wurde eine porenfreie Masse der Dichte 1,6 g/$cm^3$ erhalten. Bei der Härtung wurde ein linearer Schrumpf von 0,24 % gemessen.

**Patentansprüche**

**1.** Härtbare Reaktionsharzmischungen, die auch in Gegenwart von Luftfeuchtigkeit und/oder nicht getrockneten Medien zu kompakten, Formstoffen aushärten, dadurch gekennzeichnet, daß die Reaktionsharzmasse besteht aus:
a) festem Novolakharz (Phenol – Formaldehydharz)
b) geeigneten Lösungsmitteln
c) Katalysatoren
d) Polyisocyanaten
e) Füll –  und Verstärkungsstoffen
f) gegebenenfalls übliche Zusatzmittel

**2.** Härtbare Reaktionsharzmischungen nach Anspruch 1, dadurch gekennzeichnet, daß das Novolakharz eine Hydroxylfunktionalität von mindestens 3, einen Gehalt an Hydroxylgruppen von mindestens 12, im allgemeinen von ca. 15 bis 17 Gew. – %, bedingt durch als Nebenprodukte vorliegende Resorzine bis 21 Gew. – %, einen Erweichungspunkt von vorzugsweise ca. 75 bis 150 ° C, besonders bevorzugt 75 bis 100 ° C, aufweist.

**3.** Härtbare Reaktionsharzmischungen nach Anspruch 1 oder 2 dadurch gekennzeichnet, daß das Lösungsmittel Propylencarbonat und/oder n – Butyrolacton und/oder Ethanol und/oder Benzylalkohol ist.

**4.** Härtbare Rektionsharzmischungen nach Anspruch 1 – 3, dadurch gekennzeichnet, daß der Katalysator ein tertiäres Amin oder eine lösliche, metallorganische Verbindungen ist.

**5.** Härtbare Reaktionsharzmischungen nach Anspruch 1 – 4, dadurch gekennzeichnet, daß die Polyisocyanate beliebige organische Polyisocyanate der aus der Polyurethanchemie bekannten Art sind.

**6.** Härtbare Reaktionsharzmischungen nach Anspruch 1 – 5, dadurch gekennzeichnet, daß als besonders bevorzugte Isocyanate solche auf Basis von Diphenylmethandiisocyanat verwendet werden.

**7.** Härtbare Reaktionsharzmischungen nach Anspruch 1 – 6, dadurch gekennzeichnet, daß die verwendeten Füllstoffe aus gemahlenen Gesteinsresten, natürlichen Mineralien definierten Kernspektrums, Kurzglasfasern oder sonstige organische oder anorganische Füllstoffe sind. Die Verstärkungsmaterialien aus faserförmigen organischen oder anorganischen Textilgelegen, – geweben oder Einzelfilamenten bestehen.

**8.** Härtbare Reaktionsharzmischungen nach Anspruch 1 – 7, dadurch gekennzeichnet, daß als übliche Zusatzmittel Zeolithe, Thixotropier –  und Verdickungsmittel wie modifizierte Kieselsäuren oder hydrierte Rizinusöle, deren Derivate sowie Montmorillonite, Pigmente, Entlüftungsmittel und flüssige oder feste Weichmacher verwendet werden sowie für PUR – übliche Flammschutzmittel.

**9.** Verwendung der härtbaren Reaktionsharzmischungen nach Anspruch 1 – 7 als Verguß–, Versiegelungs– und Beschichtungsmassen sowie Form– und Reparaturmassen in Gieß–, Spachtel– und spritzfähiger Konsistenz, als Bindemittel für Laminate und Betonformulierung, sowie als Kleber in der Befestigungstechnik und Holzverarbeitung.

Europäisches Patentamt

# EUROPÄISCHER RECHERCHENBERICHT

Nummer der Anmeldung

EP 92 11 7692

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 362 486 (RÜTGERSWERKE A.G.)<br>* Ansprüche 1,3,4,7 *<br>* Seite 3, Zeile 34 - Seite 4, Zeile 19 *<br>--- | 1,4-9 | C08G18/54<br>C09D175/04<br>C09J175/04 |
| X | FR-A-2 417 356 (CPC INTERNATIONAL)<br>* Ansprüche 1-7 *<br>* Seite 11, Zeile 6 - Zeile 15 *<br>--- | 1,3 | |
| D,X | EP-A-0 023 586 (BAYER)<br>* Ansprüche 1-3,7 *<br>* Seite 9, Zeile 1 - Seite 10, Zeile 3 *<br>* Seite 15, Zeile 1 - Zeile 27 *<br>--- | 1 | |
| X | DATABASE WPIL<br>Week 8301,<br>Derwent Publications Ltd., London, GB;<br>AN 83-00677K<br>& JP-A-57 187 141 (MITSUBISHI PETROCH.)<br>* Zusammenfassung *<br>----- | 1 | |

RECHERCHIERTE SACHGEBIETE (Int. Cl.5)

C08G

Der vorliegende Recherchenbericht wurde für alle Patentansprüche erstellt

| Recherchenort | Abschlußdatum der Recherche | Prüfer |
|---|---|---|
| DEN HAAG | 21 JANUAR 1993 | VAN PUYMBROECK M. A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)